# EUROPÄISCHE PATENTSCHRIFT

(11) **EP 2 527 692 B1**
(45) Veröffentlichungstag und Bekanntmachung des Hinweises auf die Patenterteilung: **08.10.2014**
(21) Anmeldenummer: 12002897.2
(22) Anmeldetag: 25.04.2012
(51) Int. Cl.: F16H 63/34, F16H 61/36

(54) **Notentriegelungseinrichtung für ein automatisches Getriebe**
Emergency unlocking device for an automatic transmission system
Dispositif de déverrouillage d'urgence pour une transmission automatique

(30) Priorität: 26.05.2011 DE 102011102533
(43) Veröffentlichungstag der Anmeldung: 28.11.2012
(73) Patentinhaber: Audi AG, 85045 Ingolstadt (DE)
(72) Erfinder: Merklein, Harald, 85139 Wettstetten (DE); Baruth, Lars, 85101 Lenting (DE)
(74) Vertreter: Wohnert, Dietmar

(56) Entgegenhaltungen:
- EP-A2- 1 111 275
- DE-A1-102008 006 398
- DE-B3-102008 043 249

## Beschreibung

Die Erfindung betrifft eine Notentriegelungseinrichtung für ein automatisches Getriebe mit einem manuell betätigbaren Seilzug zum Bewegen eines Schalthebels zum Freigeben einer in einer Betriebsstufe eingelegten Parksperre, wie aus der gattungsbildenden DE 10 2008 006 398 bekannt.

Automatische Getriebe für Kraftfahrzeuge weisen eine Schalteinheit auf, um verschiedene manuell vorwählbare Betriebsstufen, die auch als Fahrstufen bezeichnet werden, zu wählen. Der Begriff Betriebsstufe umfasst alle Stufen eines automatischen Getriebes, einschließlich einer Parkposition und einer Neutralposition. Die Schalteinheit umfasst ein Betriebsstufenwählelement, das in mehrere Positionen bewegbar ist, die jeweils einer Betriebsstufe zugeordnet sind.

Nach dem Auswählen einer Fahr- oder Betriebsstufe durch den Fahrer wird diese durch elektrohydraulische Stellglieder eingelegt, die von einem Getriebesteuergerät angesteuert sind.

Wenn bei einem automatischen Getriebe die Parksperre eingelegt ist, wird das Getriebe blockiert, so dass das Fahrzeug bei einem eventuellen Defekt der Schalteinheit nicht abgeschleppt werden kann. Daher weisen automatische Getriebe eine Notentriegelungseinrichtung auf, die zumeist einen manuell betätigbaren Seilzug, z. B. einen Bowdenzug aufweist, um mittels des Seilzugs einen Schalthebel zu bewegen, damit die Parksperre im Notfall manuell entriegelt werden kann.

Aus der EP 1 111 275 A2 ist eine Fahrstufenwähleinrichtung mit einer Notentriegelung für eine Parksperre bekannt. Mittels eines Bowdenzugs wird ein Entriegelungshebel verschwenkt, wodurch die Parksperre manuell entriegelt wird. Der Bowdenzug ist dabei mit Spiel von einer U-förmigen Lasche gehalten, so dass bei der Montage das eine Verdickung aufweisende Ende des Bowdenzugs eingefädelt werden muss. Die U-förmige Lasche ist ein Stanzteil, das anschließend in einem vergleichsweise aufwändigen Umformprozess gebogen wird, zudem erfordert die Montage der Notentriegelungseinrichtung eine Reihe von einzelnen Schritten, wie z. B. das erwähnte Einfädeln des Bowdenzugendes.

Der Erfindung liegt daher die Aufgabe zugrunde, eine Notentriegelungseinrichtung für ein automatisches Getriebe anzugeben, die einfacher aufgebaut und dadurch kostengünstiger herstellbar und einfacher zu montieren ist.

Zur Lösung dieser Aufgabe ist bei einer Notentriegelungseinrichtung für ein automatisches Getriebe der eingangs genannten Art erfindungsgemäß vorgesehen, dass der Schalthebel einen haken- oder zahnförmigen Endabschnitt aufweist und der Seilzug an seinem Ende eine Fläche mit einem vergrößerten Durchmesser aufweist, die einen Hinterschnitt bildet, in den der Endabschnitt des Schalthebels während der Entriegelung eingreift.

Die erfindungsgemäße Notentriegelungseinrichtung umfasst einfacher aufgebaute Komponenten, die sowohl zu geringeren Fertigungskosten führen als auch eine einfachere Montage ermöglichen. Durch den haken- oder zahnförmigen Endabschnitt des Schalthebels wird sichergestellt, dass der Schalthebel und das Ende des Seilzugs während der Notentriegelung formschlüssig miteinander in Kontakt sind, so dass der Schalthebel durch den Seilzug verschwenkt wird, wodurch die Parksperre entriegelt wird. Der Seilzug weist dazu an seinem Ende eine Fläche mit einem vergrößerten Durchmesser auf, die einen Hinterschnitt bildet, in den der Endabschnitt des Schalthebels während der Entriegelung eingreift. Diese vergrößerte Fläche, die den Hinterschnitt bildet, kann vergleichsweise einfach hergestellt werden, zudem ist die Montage besonders einfach.

Die Montage kann weiter optimiert werden, wenn die Fläche mit dem vergrößerten Durchmesser am Ende des Seilzugs radialsymmetrisch ausgebildet ist. In diesem Fall ist es nicht erforderlich, den Seilzug in einer bestimmten Winkellage zu montieren, da das radialsymmetrische Ende des Schaltzugs den Schalthebel in allen Positionen verschwenken kann.

Im Rahmen der Erfindung kann es auch vorgesehen sein, dass die Fläche mit vergrößertem Durchmesser am Ende des Seilzugs zumindest teilweise tellerförmig ausgebildet ist und einen im Wesentlichen rechtwinklig abgewinkelten Rand aufweist. Vorzugsweise weist das freie Ende des abgewinkelten Randes zu dem haken- oder zahnförmigen Endabschnitt des Schalthebels hin, sodass der Rand der Fläche mit vergrößertem Durchmesser in den Hinterschnitt eingreift, wodurch der erforderliche Formschluss zwischen Seilzug und Schalthebel geschaffen wird. Bei der erfindungsgemäßen Notentriegelungseinrichtung sind auch Varianten denkbar, bei denen die Fläche am Ende des Seilzugs an ihrer zum Endabschnitt des Schalthebels weisenden Seite zumindest teilweise konkav sphärisch oder konkav konisch geformt ist. Diese Ausgestaltungen sind Alternativen zu der zuvor erwähnten tellerförmigen Fläche mit vergrößertem Durchmesser am Ende des Seilzugs. Sämtliche Varianten lassen sich vergleichsweise kostengünstig fertigen und stellen andererseits zuverlässig den für die Entriegelung der Parksperre erforderlichen Formschluss zwischen Seilzug und Schalthebel sicher.

Bei der erfindungsgemäßen Notentriegelungseinrichtung wird es bevorzugt, dass der Schalthebel und der Seilzug einander lediglich während der Entriegelung berühren und ansonsten entkoppelt sind. Wenn der Schalthebel und der Seilzug einander nicht berühren, wird die Entstehung einer Körperschallbrücke vermieden. Der Schalthebel kann zwischen einer verriegelten Position und einer entriegelten Position verschwenkt werden, ohne dass er den Seilzug oder dessen Ende berührt. Der Seilzug kann federbelastet sein und nach einer Betätigung wieder selbsttätig in seine Ausgangsposition zurückkehren.

Um eine einfache und kostengünstige Herstellung zu gewährleisten, kann es vorgesehen sein, dass der Schalthebel der erfindungsgemäßen Notentriegelungseinrichtung als Stanzteil ausgebildet ist. Insbesondere kann der haken-oder zahnförmige Endabschnitt des Schalthebels durch einen einfachen Stanzvorgang erzeugt werden, ohne dass weitere Fertigungsschritte erforderlich sind.

Eine weitere Variante der erfindungsgemäßen Notentriegelungseinrichtung kann vorsehen, dass der Schalthebel neben dem haken- oder zahnförmigen Endabschnitt einen Freigang aufweist. Dieser Freigang ermöglicht, dass der haken- oder zahnförmige Endabschnitt während des normalen Betriebs relativ nah an der Fläche mit vergrößertem Durchmesser am Ende des Seilzugs positioniert sein kann, wobei der haken- oder zahnförmige Endabschnitt sich sogar innerhalb des durch die Fläche mit vergrößertem Durchmesser mit dem abgewinkelten Rand begrenzten Volumens befinden kann. Durch den Freigang wird jedoch verhindert, dass sich der Schalthebel und das Ende des Seilzugs während des normalen Betriebs berühren.

Eine weitere fertigungsgünstige Variante der erfindungsgemäßen Notentriegelungseinrichtung sieht vor, dass die Fläche mit vergrößertem Durchmesser einstückig mit dem Ende des Seilzugs ausgebildet ist. Vorzugsweise kann die Fläche mit vergrößertem Durchmesser durch Schrauben oder Nieten oder Schweißen oder Verpressen mit dem Ende des Seilzugs verbunden sein.

Daneben betrifft die Erfindung ein Kraftfahrzeug. Das erfindungsgemäße Kraftfahrzeug weist eine Schalteinheit der beschriebenen Art auf.

Weitere Vorteile und Einzelheiten der Erfindung werden anhand von Ausführungsbeispielen unter Bezugnahme auf die Zeichnungen erläutert. Die Zeichnungen sind schematische Darstellungen und zeigen:
- Fig. 1: eine perspektivische Ansicht einer erfindungsgemäßen Notentriegelungseinrichtung einer Schalteinheit für ein automatisches Getriebe;
- Fig. 2: eine Draufsicht der Notentriegelungseinrichtung von Fig. 1;
- Fig. 3: eine geschnittene Seitenansicht der Notentriegelungseinrichtung;
- Fig. 4: einen Ausschnitt von Fig. 3 in einem vergrößerten Maßstab;
- Fig. 5: die Notentriegelungseinrichtung bei der Betätigung in einer geschnittenen Seitenansicht;
- Fig. 6: einen Ausschnitt der Notentriegelungseinrichtung von Fig. 5 in einem vergrößertem Maßstab;
- Fig. 7: die in Fig. 5 gezeigte Notentriegelungseinrichtung beim Entriegeln der Parksperre; und
- Fig. 8: ein Detail eines weiteren Ausführungsbeispiels einer Notentriegelungseinrichtung.

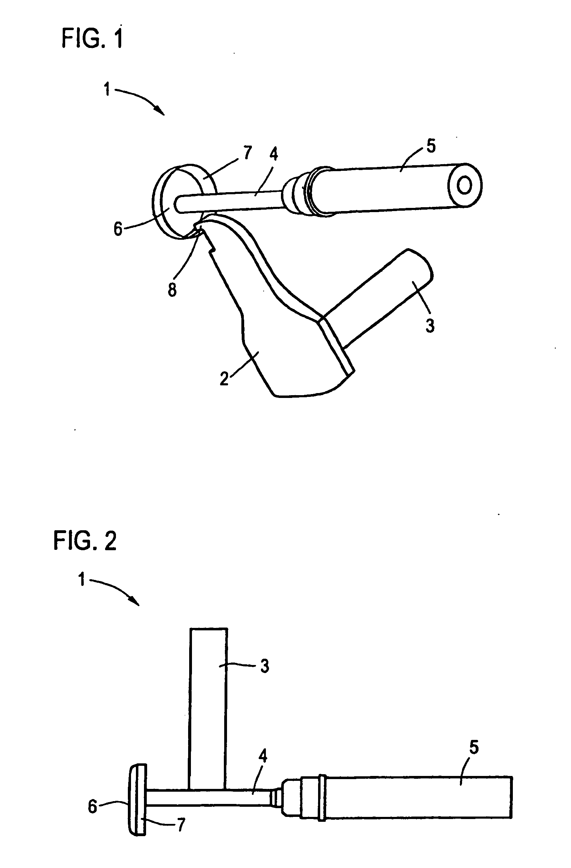

Die in den Fig. 1 und 2 gezeigten Notentriegelungseinrichtung 1 ist Bestandteil einer Schalteinheit für ein automatisches Getriebe. Die Notentriegelungseinrichtung 1 umfasst einen Schalthebel 2, der als ebenes Stanzteil ausgebildet ist. Der Schalthebel 2 weist eine Welle 3 auf, die die Drehachse des Schalthebels 2 bildet. Über die Welle 3 ist der Schalthebel 2 in bekannter Weise mit elektrohydraulischen Stellgliedern eines automatischen Getriebes verbunden. Durch eine Drehung des Schalthebels 2 um seine Drehachse wird eine eingelegte Parksperre freigegeben. Eine derartige manuelle Entriegelung ist lediglich bei einem Ausfall der Schalteinheit erforderlich, damit das Fahrzeug abgeschleppt werden kann.

Weiterhin umfasst die Notentriegelungseinrichtung 1 einen Seilzug 4, von dem in Fig. 1 lediglich der Endabschnitt dargestellt ist. Am entgegengesetzten Ende kann durch den Benutzer eine Zugkraft ausgeübt werden, um den Schalthebel 3 zu verschwenken. Der Seilzug 4 ist in einer Hülle 5 geführt. Am Ende des Seilzugs 4 befindet sich eine Fläche 6 mit vergrößertem Durchmesser die radialsymmetrisch ausgebildet ist. In dem dargestellten Ausführungsbeispiel ist die Fläche 6 im Wesentlichen tellerförmig und weist einen im Wesentlichen rechtwinklig abgewinkelten Rand 7 auf. Der Rand 7 ist somit parallel zur Betätigungseinrichtung des Seilzugs 4 angeordnet. Durch die radialsymmetrische Form der Fläche 6 ist die Montage des Seilzugs 4 vereinfacht, da keine bestimmte Winkellage zwischen Seilzug 4 und Schalthebel 2 einzustellen ist.

Der Schalthebel 2 weist einen haken- oder zahnförmigen Endabschnitt 8 auf, der zum Ende des Seilzugs 4 hin weist. Durch den Endabschnitt 8 ist sichergestellt, dass der Schalthebel 2 und der Seilzug 4 lediglich über einen Punktkontakt verbunden sind.

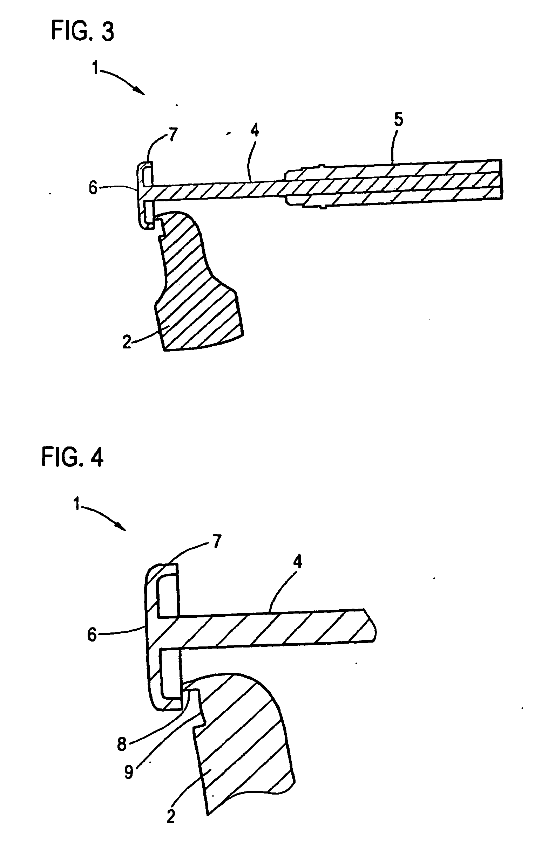

Die Fig. 3 und 4 zeigen die Notentriegelungseinrichtung 1 in einer geschnittenen Seitenansicht, wobei Fig. 4 den Endabschnitt des Seilzugs 4 in einer vergrößerten Ansicht zeigt. Die Fig. 3 und 4 zeigen die Notentriegelungseinrichtung 1 im Normalzustand, d. h. wenn sie nicht betätigt ist. In diesem Zustand berührt der Schalthebel 2 nicht den Seilzug 4 bzw. dessen vergrößerte Fläche 6. Dementsprechend wird kein von dem automatischen Getriebe stammender Körperschall über den Schalthebel 2 an den Seilzug 4 übertragen. Weiterhin erkennt man, dass der Schalthebel 2 unmittelbar neben bzw. unterhalb des Endabschnitts 8 einen Freigang 9 aufweist wodurch sichergestellt ist, dass die Fläche 6 mit vergrößertem Durchmesser am Ende des Seilzugs 4 den Schalthebel 2 nicht berührt. Andererseits ist der Abstand zwischen dem Endabschnitt 8 und des Schalthebels 2 und der Fläche 6 des Seilzugs 4 gering, so dass bei einer manuellen Betätigung des Seilzugs 4 bereits ein geringer Betätigungsweg ausreicht, um den Schalthebel 2 zu verschwenken.

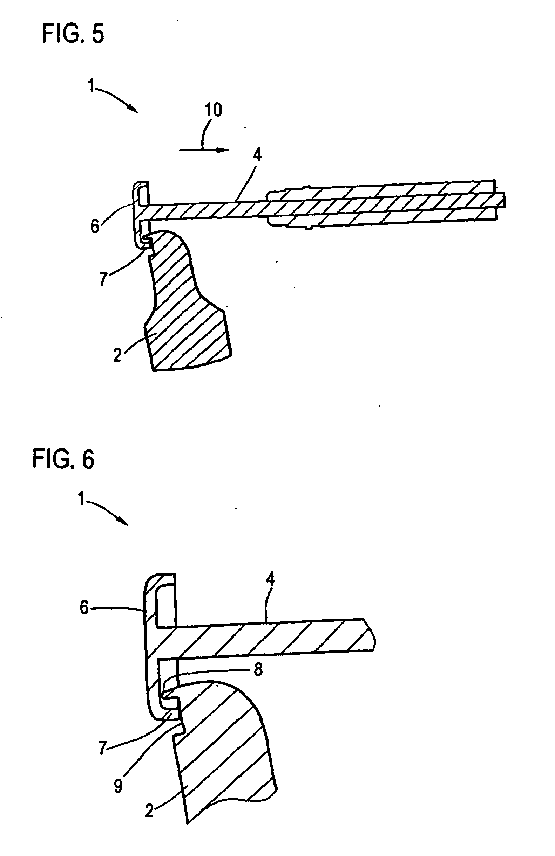

Die Fig. 5 und 6 zeigen die Notentriegelungseinrichtung 1 in einer geschnittenen Seitenansicht während der Betätigung, wobei Fig. 6 den Kontaktbereich zwischen Schalthebel und Seilzug in einem vergrößerten Maßstab zeigt. Bei einer Betätigung der Notentriegelungseinrichtung 1 wird der Seilzug 4 in der durch den Pfeil 10 angegebenen Richtung gezogen. Wie am besten in Fig. 6 zu sehen ist, berührt der Rand 7 der vergrößerten Fläche 6 am Ende des Seilzugs 4 den Schalthebel 2 im Bereich des Freigangs 9, wodurch der Schalthebel 2 im Uhrzeigersinn um seine Drehachse geschwenkt wird. Es sind auch andere Ausgestaltungen des Endabschnitts 8 des Schalthebels 2 möglich, bei denen der haken- oder zahnförmige Endabschnitt 8 weiter vorspringt, so dass der Endabschnitt 8 die Fläche 6 berührt. Durch die zumindest geringe Drehung des Schalthebels 2 wird die eingelegte Parksperre freigegeben, so dass das Fahrzeug abgeschleppt werden kann.

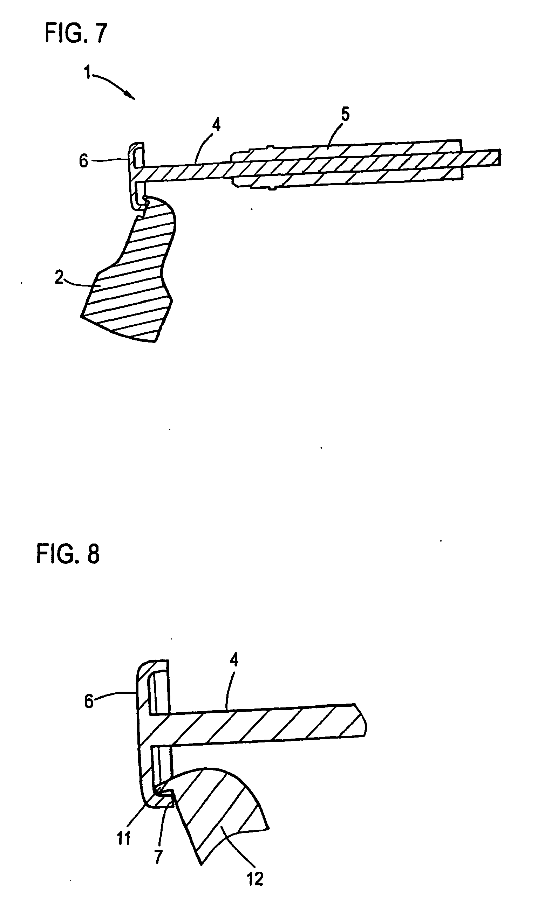

Fig. 7 zeigt die Notentriegelungseinrichtung 1 im entriegelten Zustand. Der Schalthebel 2 ist ausgehend von der in Fig. 5 gezeigten Stellung im Uhrzeigersinn gedreht worden, wodurch die Entriegelung der Parksperre bewirkt wird. Nach dem Loslassen des federbelasteten Seilzugs 4 wird dieser unter dem Einfluss einer Feder wieder in die in Fig. 5 gezeigte Ausgangsposition zurückbewegt. Durch die lediglich kurze Auskragung des Seilzugs 4 aus der Hülle 5 ist eine genaue Positionierung des die Fläche 6 aufweisenden Endes des Seilzugs 4 und eine gute Führung des Seilzugs 4 in der Hülle 5 gewährleistet.

Fig. 8 zeigt ein weiteres Ausführungsbeispiel einer Notentriegelungseinrichtung. Der Endabschnitt 11 des Schalthebels 12 ist hakenartig ausgebildet. Dieser Endabschnitt steht weiter vom Grundkörper des Schalthebels 12 ab als bei dem Schalthebel 2, so dass auf einen Freigang verzichtet werden kann. In Fig. 8 erkennt man, dass einerseits der Endabschnitt 11 des Schalthebels 12 die Innenseite der Fläche 6 mit vergrößertem Durchmesser des Seilzugs 4 berührt, andererseits berührt der Rand 7 der Fläche 6 den Schalthebel 12 neben dem Endabschnitt 11. Auf diese Weise wird der erforderliche Kraftschluss sichergestellt. Der Endabschnitt 11 kann bei einer anderen Ausführung weiter vom Schalthebel 12 abstehen, so dass lediglich der Endabschnitt 11 und die Innenseite der Fläche 6 einander berühren, wenn der Benutzer eine manuelle Notentriegelung vornimmt. Bei der Notentriegelungseinrichtung von Fig. 8 ist die Fläche 6 mit dem Rand 7 einstückig mit dem Ende des Seilzugs 4 verpresst.

## Patentansprüche

1. Notentriegelungseinrichtung für ein automatisches Getriebe mit einem manuell betätigbaren Seilzug zum Bewegen eines Schalthebels zum Freigeben einer in einer Betriebsstufe eingelegten Parksperre, wobei der Schalthebel (2, 12) einen haken- oder zahnförmigen Endabschnitt (8, 11) aufweist, **dadurch gekennzeichnet, daß** der Seilzug (4) an seinem Ende eine Fläche (6) mit einem vergrößerten Durchmesser aufweist, die einen Hinterschnitt bildet, in den der Endabschnitt (8, 11) des Schalthebels (2, 12) während der Entriegelung eingreift.

2. Notentriegelungseinrichtung nach Anspruch 1,
**dadurch gekennzeichnet,**
**dass** die Fläche (6) mit dem vergrößerten Durchmesser radialsymmetrisch ausgebildet ist.

3. Notentriegelungseinrichtung nach Anspruch 1 oder 2,
**dadurch gekennzeichnet,**
**dass** die Fläche (6) am Ende des Seilzugs zumindest teilweise tellerförmig ausgebildet ist und einen im Wesentlichen rechtwinklig abgewinkelten Rand (7) aufweist.

4. Notentriegelungseinrichtung nach Anspruch 1 oder 2,
**dadurch gekennzeichnet,**
**dass** die Fläche am Ende des Seilzugs (4) an ihrer zum Endabschnitt des Schalthebels (2, 12) weisenden Seite zumindest teilweise konkav sphärisch oder konkav konisch geformt ist.

5. Notentriegelungseinrichtung nach einem der vorangehenden Ansprüche,
**dadurch gekennzeichnet, dass**
der Schalthebel (2, 12) und der Seilzug (4) einander lediglich während der Entriegelung berühren und ansonsten entkoppelt sind.

6. Notentriegelungseinrichtung nach einem der vorangehenden Ansprüche,
dadurch gekenntzeichnet, dass
der Schalthebel (2, 12) als im Wesentlichen ebenes Blechteil ausgebildet ist, das durch Stanzen oder Laserschneiden hergestellt ist.

7. Notentriegelungseinrichtung nach einem der vorangehenden Ansprüche,
**dadurch gekennzeichnet, dass**
der Schalthebel (2) neben dem haken- oder zahnförmigen Endabschnitt (8) einen Freigang (9) aufweist.

8. Notentriegelungseinrichtung nach einem der vorangehenden Ansprüche,
**dadurch gekennzeichnet, dass** die Fläche (6) mit vergrößertem Durchmesser einstückig mit dem Ende des Seilzugs (4) ausgebildet ist.

9. Schalteinheit nach einem der Ansprüche 1 bis 7,
**dadurch gekennzeichnet, dass**
die Fläche mit vergrößertem Durchmesser (6) durch Schrauben oder Nieten oder Schweißen oder Verpressen mit dem Ende des Seilzugs (4) verbunden ist.

10. Kraftfahrzeug,
**dadurch gekennzeichnet, dass**
es ein automatisches Getriebe mit einer Notentriegelungseinrichtung nach einem der Ansprüche 1 bis 9 aufweist.

## Claims

1. Emergency unlocking device for an automatic transmission having a manually operable linkage for moving a shift lever in order to release a parking lock inserted in an operating position, said shift lever (2, 12) having a hooked or tooth-shaped end portion (8, 11), **characterised in that** the linkage (4) comprises at its end a surface (6) having an increased diameter which forms an undercut in which the end portion (8, 11) of the shift lever (2, 12) engages during the unlocking.

2. Emergency unlocking device according to claim 1, **characterised in that** the surface (6) of increased diameter is of radially symmetrical configuration.

3. Emergency unlocking device according to claim 1 or 2, **characterised in that** the surface (6) at the end of the linkage is at least partially of plate-like configuration and has an edge (7) which is bent substantially at right-angles.

4. Emergency unlocking device according to claim 1 or 2, **characterised in that** the surface at the end of the linkage (4) is at least partially of concave-spherical or concave-conical configuration on its side facing the end portion of the shift lever (2, 12).

5. Emergency unlocking device according to one of the preceding claims, **characterised in that** the shift lever (2, 12) and the linkage (4) touch each other only during the unlocking and are otherwise disengaged.

6. Emergency unlocking device according to one of the preceding claims, **characterised in that** the shift lever (2, 12) is embodied as a substantially flat sheet metal part produced by punching or laser cutting.

7. Emergency unlocking device according to one of the preceding claims, **characterised in that** the shift lever (2) has a clearance (9) adjacent to the hooked or tooth-shaped end portion (8).

8. Emergency unlocking device according to one of the preceding claims, **characterised in that** the surface of increased diameter (6) is formed in one piece with the end of the linkage (4).

9. Shift unit according to one of claims 1 to 7, **characterised in that** the surface of increased diameter (6) is connected to the end of the linkage (4) by screwing or riveting or welding or pressing.

10. Motor vehicle, **characterised in that** it comprises an automatic transmission having an emergency unlocking device according to one of claims 1 to 9.

## Revendications

1. Dispositif de déverrouillage d'urgence pour une transmission automatique, avec un câble de transmission actionnable manuellement pour déplacer un levier de commande afin de libérer un frein de stationnement enclenché dans un rapport de boîte, le levier de commande (2, 12) comportant une partie terminale (8, 11) en forme de crochet ou de dent,
**caractérisé en ce que** le câble de transmission (4) comporte à son extrémité une surface (6) qui a un diamètre supérieur et qui forme une contre-dépouille dans laquelle pénètre la partie terminale (8, 11) du levier de commande (2, 12) pendant le déverrouillage.

2. Dispositif de déverrouillage d'urgence selon la revendication 1, **caractérisé en ce que** la surface (6) ayant un diamètre supérieur est conçue selon une symétrie radiale.

3. Dispositif de déverrouillage d'urgence selon la revendication 1 ou 2, **caractérisé en ce que** la surface (6) à l'extrémité du câble de transmission est conçue au moins en partie en forme de plateau et comporte un bord coudé (7) sensiblement à angle droit.

4. Dispositif de déverrouillage d'urgence selon la revendication 1 ou 2, **caractérisé en ce que** la surface à l'extrémité du câble de transmission (4) a une forme, sur son côté regardant vers la partie terminale du levier de commande (2, 12), au moins en partie concave sphérique ou concave conique.

5. Dispositif de déverrouillage d'urgence selon l'une des revendications précédentes, **caractérisé en ce que** le levier de commande (2, 12) et le câble de transmission (4) se touchent simplement pendant le déverrouillage et sont découplés sinon.

6. Dispositif de déverrouillage d'urgence selon l'une des revendications précédentes, **caractérisé en ce que** le levier de commande (2, 12) est conçu globalement comme une pièce de tôle plane qui est fabriquée par estampage ou par découpe au laser.

7. Dispositif de déverrouillage d'urgence selon l'une des revendications précédentes, **caractérisé en ce que** le levier de commande (2) comporte un dégagement (9) à côté de la partie terminale (8) en forme de crochet ou de dent.

8. Dispositif de déverrouillage d'urgence selon l'une des revendications précédentes, **caractérisé en ce que** la surface (6) ayant un diamètre supérieur est conçue d'une seule pièce avec l'extrémité du câble de transmission (4).

9. Unité de commande selon l'une des revendications 1 à 7, **caractérisée en ce que** la surface (6) ayant un diamètre supérieur est assemblée à l'extrémité du câble de transmission (4) par vissage, rivetage, soudage ou pressage.

10. Véhicule automobile, **caractérisé en ce qu'**il comporte une transmission automatique avec un dispositif de déverrouillage d'urgence selon l'une des revendications 1 à 9.
